Europäisches Patentamt

European Patent Office

Office européen des brevets

(11) Publication number : **0 508 819 A2**

# (12) EUROPEAN PATENT APPLICATION

(21) Application number : **92303243.7**

(22) Date of filing : **10.04.92**

(51) Int. Cl.⁵ : **G01S 5/00,** G01S 5/20,
G10K 9/04, B63C 11/00

(30) Priority : **10.04.91 GB 9107558**
**15.01.92 GB 9200813**

(43) Date of publication of application :
**14.10.92 Bulletin 92/42**

(84) Designated Contracting States :
**AT BE CH DE DK ES FR GR IT LI LU MC NL PT SE**

(71) Applicant : **ABBOTSBURY SOFTWARE LIMITED**
**4 Back Street**
**Abbotsbury, Dorset DT3 4JP (GB)**

(72) Inventor : **Snape, Timothy Richard,**
**Abbotsbury Software Ltd**
**4 Back Street, Abbotsbury**
**Dorset DT3 4JP (GB)**

(74) Representative : **Jones, Graham H.**
**Graham Jones & Company 77 Beaconsfield**
**Road Blackheath**
**London SE3 7LG (GB)**

(54) Apparatus for tracking and communicating with objects under water.

(57) Apparatus for tracking and communicating with objects under water, which apparatus comprises first acoustic transmission means (2) which is able to transmit first acoustic signals (3) from an object (1) under water, and a monitor and communications systems (5) which is on or below the water and which comprises second acoustic transmission means which is able to transmit second acoustic signals to the object (1) under water, location determining means which is able to locate the source of the first acoustic signals (3), and receiver means (7) for enabling the first and the second acoustic signals to be received and responded to.

FIG 1

This invention relates to apparatus for tracking and communicating with objects under water, for example divers under water.

In accordance with the present invention there is provided apparatus for tracking and communicating with objects under water, which apparatus comprises first acoustic transmission means which is able to transmit first acoustic signals from an object under water, and a monitor and communications system which is on or below the water and which comprises second acoustic transmission means which is able to transmit second acoustic signals to the object under water, location determining means which is able to locate the source of the first acoustic signals, and receiver means for enabling the first and the second acoustic signals to be received and responded to.

The apparatus may be one in which the first and the second acoustic transmission means each uses frequency, amplitude, phase or pulse modulation to convey data.

Preferably, the first and/or the second acoustic transmission means are each gas-operated apparatus for making a noise under water.

The object under water may be a diver, and then the first acoustic transmission means is advantageously the diver's air cylinder or cylinders. The acoustic signals may thus be generated using the pressure difference between the inside of the diver's air or gas filled cylinder or cylinders, and the external environment.

The location determining means may comprise direction determining means for determining the direction from which the first acoustic signals are coming, and distance determining means for determining the distance from which the first acoustic signals are coming.

The direction determining means may comprise a plurality of receivers arranged in an appropriate configuration. The difference in time taken for the first acoustic signals to arrive at each receiver may be used to calculate the direction from which the sound is transmitted.

The distance determining means may be a communications link between the object under water and the monitoring and communications system.

The monitor and communications system may comprise a communications link having a receiving system which acknowledges successful receipt of a transmission from the object under water. The time taken for the acknowledgement may be used to calculate the distance between the two transmitters/receivers.

The apparatus of the present invention is advantageous in combining communications and tracking systems into one device so that the apparatus of the present invention can generally be simpler, cheaper, more robust and easier to operate than two separate systems dedicated to one function each.

Where the apparatus of the invention is used with the object under water being a diver, then the apparatus advantageously improves diver safety. Divers that are lost may be located, and divers in difficulty may be assisted. Dive profiles (how much time is spent at what depth)may be monitored from the Surface and may thus allow early diagnosis of potential decompression problems.

When the apparatus of the invention is used with divers, then another advantage is enhanced communication. Divers can communicate with the surface as to information about the progress of their dive. Additional devices may be employed to further this aspect of the invention, examples of such devices being CCD TVs, microphones and the like. The data from such devices can be digitised and transmitted to a base station in a data packet structure. The volume of data transmitted may be controlled and restricted depending upon control information received from the surface station, or received directly from other divers.

Advantageously, the apparatus of the present invention enables one diver to communicate with another diver. The surface station may be used to track each diver. The surface station can relay to each diver their positions relative to each other, thus improving diver safety. A still further advantage is that, using an appropriate communications protocol, a large number of divers can be controlled from one or more surface stations.

An advantage of generating the first acoustic signal using the diver's cylinder pressure is that the power required to generate the'acoustic signals need not be electrical. This means that'the diver's system may be simpler, cheaper and more robust than known systems. A further advantage of generating the acoustic signals using the diver's cylinder pressure, is that the means used to generate the first acoustic signals may also be used to quantify the pressure between the inside and the outside of the diver's cylinder or cylinders, thereby reducing the cost of equipment.

The first and/or the second acoustic transmission means may be electrical acoustic transmission means if desired. However, as indicated above, it is preferred that the first and/or the second acoustic transmission means are each gas-operated apparatus for making a noise under water.

In a presently preferred embodiment of the invention, the gas-operated apparatus for making a noise under water comprises a body, a diaphragm which extends over the body to define a chamber between the body and the diaphragm, a gas Inlet nozzle which extends into the chamber and which engages an inner surface of the diaphragm, and gas outlet means for enabling gas in the chamber to leave the chamber, the diaphragm being made of an elastic material, the diaphragm being such that it has an outer surface which is in contact with a liquid, and the apparatus being such that in use gas under pressure passes through the gas inlet nozzle and causes the diaphragm to expand and collapse over a region of the diaphragm that is in contact with the gas inlet nozzle thereby to create noise which is adapted for optimum underwater transmission due to the diaphragm being in contact with the liquid.

The expansion and collapse of the diaphragm may be effective to generate noise at low frequencies. Such low frequency noise is not unpleasant for divers to hear and it does not tend to damage the hearing of divers. Thus the low frequency noise can be transmitted with high power over long distances under water without damage to the hearing of divers.

If desired, the gas-operated apparatus may be one in which the diaphragm is in direct contact with water in which the apparatus is being used, the liquid then being the water in which the apparatus is being used.

Alternatively, the gas-operated apparatus may include an outer housing, an external membrane which is corrected to the outer housing and which is in contact with water when the apparatus is in use under water, and a liquid filled cavity formed between the outer housing and the external membrane, the liquid then being the liquid in the liquid filled cavity.

The liquid in the liquid filled cavity is preferably castor oil. Other liquids such for example as water may however be employed.

The gas-operated apparatus may include pump means for modifying the liquid pressure in the liquid filled cavity. For example, the pump means may be employed to increase the pressure in the liquid filled cavity, thereby to decrease the frequency of the generated noise.

Usually, the diaphragm and the external membrane will be impedance matched for obtaining optimum sound transmission in the water.

The gas-operated apparatus may include tension-adjuster means for adjusting tension in the diaphragm. Variations in the tension in the diaphragm can be employed to vary the frequency of the generated sound.

The tension-adjuster means may be screw ring member which is secured to a peripheral part of the diaphragm and which is able to be screwed along a threaded part of the body.

The gas-operated apparatus may include gas inlet valve control means for controlling the rate of flow of gas through the nozzle. This control of the rate of flow of gas through the nozzle may determine the generated sound signal amplitude and frequency.

The gas-operated apparatus may include gas outlet valve control means for controlling the gas pressure in the chamber. This control of the gas pressure in the chamber may be employed to vary the frequency of the generated sound.

The nozzle may comprise a flexible disc part which is able to be increased or decreased in size by gas pressure. The gas-operated apparatus may include nozzle size valve control means for controlling the size of the flexible disc part.

It will be appreciated that various means may be employed for varying the frequency and/or amplitude of the generated sound in order to ensure that the generated sound is at a desired frequency, for example from 100Hz to 8KHz.

The gas-operated apparatus may include gas flow restrictor means for ensuring that the gas cannot pass too quickly through the gas inlet nozzle in the event of a failure of part of the apparatus, for example in the event of a failure of the gas inlet valve control means which might otherwise allow a sudden rush of gas through the gas inlet nozzle and the generation of too loud a noise which might be damaging to a diver, for example to the diver's eardrums.

The gas-operated apparatus may include outlet gas diffuser means for converting outlet gas passing through the gas outlet means into fine bubbles. Smoothing out the bubbles of the exhaust gas helps to stabilize back pressure and gives better acoustic signals and helps to avoid any tendency for a knocking noise to be generated.

The outlet gas diffuser means may be a bubble stone of the type used in aquariums.

The gas-operated apparatus may include a source of gas.

The source of gas may be a source of air, or a source of any other suitable and appropriate gas such for example as carbon dioxide, nitrogen and steam. The source of gas can be a separate source of gas or it can be a diver's compressed air cylinder.

Embodiments of the invention will now be described solely by way of example and with reference to the accompanying drawings in which:

Figure 1 shows somewhat schematically the various parts of apparatus for tracking and communicating with an object under water;

Figures 2 and 3 are similar cross sections through acoustic transmission means in the form of first gas-operated apparatus for making a noise under water;

Figure 4 is a cross section through acoustic transmission means in the form of second gas-operated apparatus for making a noise under water; and

Figure 5 shows acoustic transmission means in the form of third gas operated apparatus for making a noise under water.

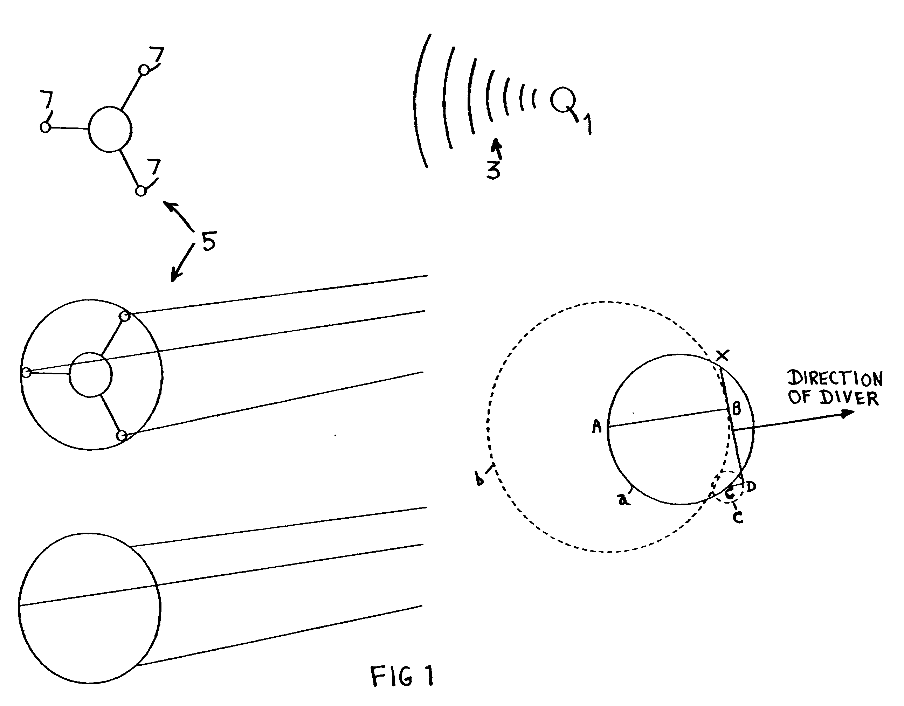

Referring to Figure 1, there is shown schematically an object in the form of a diver 1 transmitting first acoustic signals 3. There is also shown a monitor and communication surface system 5. As shown, the monitor and communications surface system 5 has receivers 7.

Points AXC represent receivers 7 on the monitor and communications surface system 5. Lines AB and CD represent the time differences between the receipt of signals. Circle "a" represents the receiving system. Circles "b" and "c" are formed using lines AB and CD as their radii with points A and C as their centres. The direction of a diver or divers is found by drawing a line perpendicular to the common tangents of the circles "b" and "c".

It will thus be apparent that the apparatus of the invention allows a person to track one or more divers under water in a simple and efficient manner. Each diver may carry a small hand held computer (not shown). This computer may monitor ambient and cylinder pressure (depth and air remaining). The computer will be able to communicate with other systems using a network protocol. The physical data communications are performed acoustically using frequency, amplitude, phase or pulse modulation as desired. The diver's computer has a data entry capability via a keypad, and a data output via a small liquid crystal display screen and a piezo-electric buzzer, which is audible under water.

The apparatus utilises a surface system similar to the diver system, with the surface system having the additional capability of being able to locate the source of the first acoustic transmissions.

Directional information for the source of the first acoustic transmissions is found by employing multiple receivers in an appropriate arrangement. The difference in time taken for the first acoustic signals to arrive at each receiver may be used to calculate the direction from which the sound is transmitted.

Distance information for the source of the first acoustic transmissions may be found by adopting a communications link between the diver or divers being tracked and the monitoring system. The communications link may utilise a receiving system acknowledging successful receipt of a transmission from a diver or divers. The time taken for the receipt of the acknowledgement may be used to calculate the distance between the two transmitter/ receivers. Sound travels at approximately 1500 metres per second under water. If the acknowledgement time can be measured to an accuracy of 100 microseconds, then the distance separating the receiver/transmitters can be measured to an accuracy of one sixth of a metre.

The protocol used for the communications link would also allow for data to be transmitted. The data transmitted from the diver may contain information regarding diver biometrics (eg rate of breathing), environmental information such as ambient pressure (depth), temperature, or data generated by the diver such as keyed data, or images from a CCD camera. The data transmitted from the surface system may contain command and control information such as the location of other divers or instructions to ascend.

By way of example, a communications protocol will now be described for a surface to diver communications tracking system.

No diver or surface system will transmit or attempt to transmit any data whilst a transmission is taking place. If a transmission is taking place, a diver or surface system that is attempting to transmit will wait a period of time before attempting to transmit again. The period of time will be chosen as is most appropriate.

The surface system will send the data acoustically. The data content of the transmission will be modulated as is appropriate.

A sequence of acoustic transmissions will be combined into a packet. The packet will contain the data being transmitted plus all necessary synchronisation information, for example as follows.

| Start of Packet: | a signal of predetermined duration and frequency |
|---|---|
| Identity of receiver: | a 16 bit address |
| Identity of sender: | a 16 bit address |
| Length of data: | a 16 bit value |
| Start of data: | an 8 bit value |
| DATA: | The length of data number of bytes |
| End of text: | an 8 bit value |
| Checksum: | a 16 bit check digit |
| End of packet: | a continuous frequency |

The identity word of the receiver and sender will serve to identify the sending system and the receiving system, thus enabling several systems to operate at the same time.

By supporting a length of data word, transmissions may be of variable length.

The start of data, end of data, checksum and end of packet values will serve to ensure that the data is transmitted reliably.

Once a diver system has received a data packet addressed to it, the diver system will respond immediately with an acknowledgement transmission, indicating successful receipt of the data packet.

The length of time taken from the end of the packet transmission to the acknowledgement being received by the surface system, will determine the distance between the surface system and the diver system. The diver system will then respond with a data packet containing any data the diver may have for the surface system. The format of the diver's data packet will be the same as that of the surface systems packet. The surface system will then respond with an acknowledgement transmission to indicate successful receipt of the data packet.

The means used to generate the acoustic signals by the surface system may be by electrical stimulation of an appropriate piezo-electric arrangement. Other means may however be employed. The means used by the diver system to generate the acoustic signals is preferably gas-operated but may be electrical or other means.

The diver system may support additional transmission loads. Thus, for example, a low frequency pulse load may be used to signal emergencies. Low frequencies suffer less from attenuation and they thus may be received over longer distances.

It is to be appreciated that the embodiment of the invention described above with reference to the object under water being a diver has been given by way of example only and that modifications may be effected. Thus, for example, other objects may be monitored and communicated with. Where the object is a diver, then the diver's acoustic signals may be generated using the pressure difference between the inside of the diver's air or gas filled tanks and the external environment.

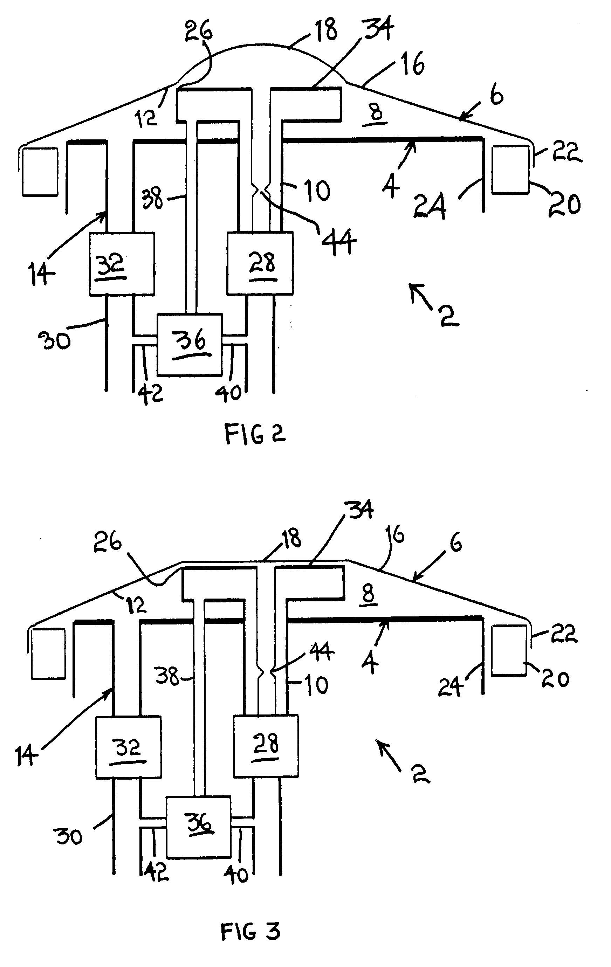

Referring to Figures 2 and 3, there is shown acoustic transmission means in the form of gas-operated apparatus 2 for making a noise underwater.

The apparatus 2 comprises a body 4, and a diaphragm 6 which extends over the body 4 to define a chamber 8 between the body 4 and the diaphragm 6. The apparatus 2 further comprises a gas inlet nozzle 10 which extends into the chamber 8 and which engages an inner surface 12 of the diaphragm 6. The apparatus 2 still further comprises gas outlet means 14 for enabling gas in the chamber 8 to leave the chamber 8. The diaphragm 6 is made of an elastic material. The diaphragm 6 is also such that it has an outer surface 16 which is in contact with water when the apparatus 2 is used under water.

The apparatus 2 is such that, in use, gas under pressure passes through the gas inlet nozzle 10 and causes the diaphragm 6 to expand and collapse over a region 18 of the diaphragm 6 that is in contact with the gas inlet nozzle 10 thereby to create noise which is adapted for optimum underwater transmission due to the diaphragm 6 being in contact with the water in which the apparatus 2 is being used. As can be seen from Figures 2 and 3, the diaphragm 6 is not enclosed so that the diaphragm 6 is in direct contact with the water in which the apparatus 2 is being used.

The apparatus 2 includes tension-adjuster means in the form of a screw ring member 20 which is secured to a peripheral part 22 of the diaphragm 6 and which is able to be screwed along a threaded part 24 of the body 4. Screwing the screw ring member 20 backwards and forwards along the threaded part 24 is effective to alter the tension in the diaphragm 6 and is thus effective to alter the frequency and sound of the noise generated.

The noise is actually generated by the gas passing along the gas inlet nozzle 10 and initially expanding the diaphragm 6 in the region 18 as can be seen by comparing Figures 1 and 2. After a while, the expansion of the region 18 gets so great that the diaphragm 6 moves off the edge 26 of the gas inlet nozzle 10. The expanded region 18 then collapses. The expansion and contraction of the region 18 generates the noise and the frequency of the noise generated can be varied by a number of ways including the above mentioned tension in the diaphragm 6.

The apparatus 2 includes gas inlet valve control means 28 for controlling the rate of flow of gas through the nozzle 10. This gas inlet valve control means 28 forms another way of varying the frequency and/or amplitude of the noise signals generated.

The gas outlet means 14 comprises a pipe 30 and a gas outlet control valve 32. Control of this valve 32 again is able to affect the sound generated by varying the frequency and/or the amplitude of the sound generated.

The apparatus 2 shown in Figures 2 and 3 is such that the gas inlet nozzle 10 has a flexible disc part 34 which is able to be increased or decreased in size by gas pressure. This increase or decrease in size of the flexible disc part 34 is effected using nozzle size valve control means 36. This valve control means 36 is a 3-way valve as shown and it is communication with the flexible disc part 34 by a pipe 38, is in communication with the gas inlet nozzle 10 by a pipe 40, and is in communication with the pipe 30 by a pipe 42.

The apparatus 2 includes a safety device in the form of a gas flow restrictor means 44. The gas flow restrictor means 44 is in the form of a constriction in the gas inlet nozzle 10. The gas flow restrictor means ensures that gas cannot pass too quickly through the gas inlet nozzle 10 and thus generate a sudden loud noise in the event of a failure of a part of the apparatus 2, for example a failure of the gas inlet valve control means 28. It will be appreciated that a sudden loud generation of noise could be dangerous to a diver in that it might startle the diver and/or might damage the diver's hearing.

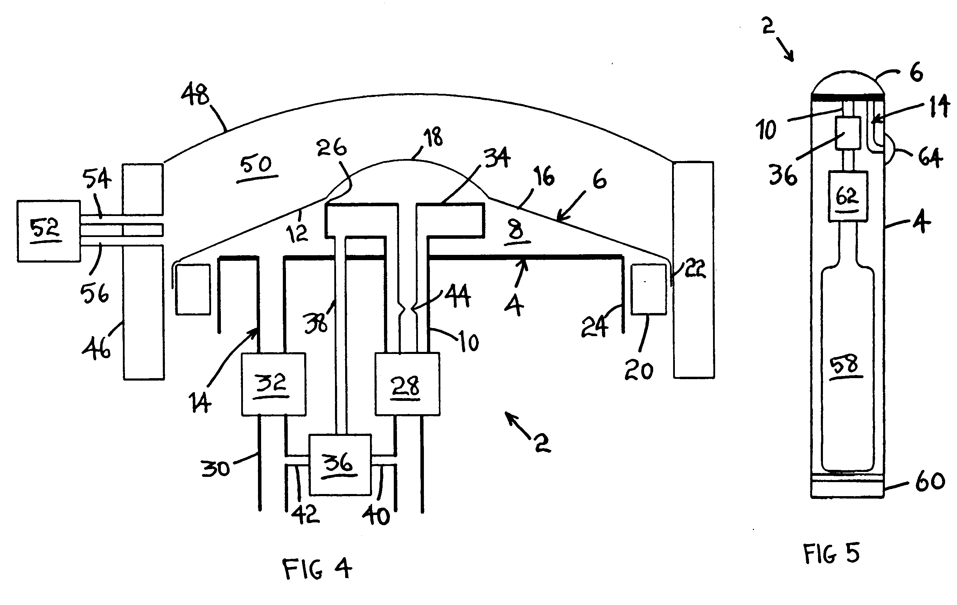

Referring now to Figure 4, similar parts as in Figure 3 have been given the same reference numerals for ease of comparison and understanding. In Figure 4, it will be seen that the apparatus 2 includes an outer housing 46 and an external membrane 48 which is connected to the outer housing 46. The external membrane 48 is in contact with water when the apparatus is used underwater. A liquid-filled cavity 50 is formed between the outer housing 46 and the external membrane 48. The liquid in the liquid-filled cavity 50 is castor oil. The outer surface 16 of the membrane 6 is thus in contact with the castor oil. Sound generated by the expansion and contraction of the region 18 of the diaphragm 6 causes the generated sound to travel through the castor oil In the liquid-filled cavity 50, then to the external membrane 48 and then into the water in which the apparatus 2 is submerged.

The apparatus 2 shown in Figure 4 includes pump means in the form of a pump 52 which is connected to the liquid-filled cavity 50 by pipes 54, 56. The pump 52 may be used to increase or decrease the liquid pressure in the liquid-filled cavity 50, thereby to modify the frequency and/or amplitude of the sound being generated. The diaphragm 6 and the external membrane 48 will usually be impedance matched.

During use of the apparatus 2 shown in Figures 2 and 3, high pressure air will enter the gas inlet nozzle 10, whilst low pressure air will leave the apparatus 2 via the gas outlet means 14. The gas inlet valve control means 28, the gas outlet control valve 32 and the nozzle size valve control means 36 may be controlled manually and/or they may be controlled externally by electrical and/or mechanical means.

Referring now to Figure 5, there is shown third gas-operated apparatus 2 for making a noise underwater. Similar parts as in Figures 2 to 4 have again been given the same reference numerals for ease of comparison and understanding.

As can be seen from Figure 5 the apparatus 2 is in the form of a thin cylinder which can be held in a user's hand. The body 4 is in the form of a cylinder and it contains a source 58 of compressed gas. The body 2 has a screw on end cap 60 which enables the source 58 to be replaced as and when necessary. The apparatus 2 further has a pressure regulating device 62 for regulating the gas pressure leaving the source 58.

The gas outlet means 14 is provided with gas outlet diffuser means 64 for converting outlet gas passing through the gas outlet means 14 into fine bubbles. The diffusion of the exhaust gas bubbles helps to minimise on back pressure and gives better acoustic signals by helping to avoid a knocking noise being generated caused by the uncontrolled release of the exhaust gases.

The apparatus described with reference to the drawings and especially with reference to Figure 1 illustrates that the apparatus has the following advantageous points.

a) The position fixing mechanism works using long wavelength low frequency acoustic sources. The advantage of low frequency sources is that they suffer less from attenuation in water and thus the system can function over large ranges using comparatively low powered acoustic sources.

b) The low frequency signal may be generated using a pneumatic source actuating an oscillating diaphragm. The frequencies emitted may be in the range 100 Hz to 1 KHz. The advantage of using a pneumatic source is that it is more reliable and robust in a marine environment than conventional electrically powered systems, especially in situations where there is a ready supply of compressed gases and where reliability is of importance. Thus the apparatus may be used by scuba divers and divers using umbilicals.

c) By employing a protocol in the transmissions emitted by the pneumatic acoustic source, the signal can be used to convey additional information such as digital data entered by an operator, or biometric information describing the physiological state of the diver.

d) Because the signal is a low frequency signal, the operator will actually be able to hear it and thus will know if the device is working.

e) Because the acoustic signals frequency is below 1 KHz, the signal will not be overly unpleasant or deleterious to the operator's hearing, below or above water.

It is to be appreciated that the embodiments of the invention described above with reference to the accompanying drawings have been given by way of example only and that modifications may be effected. Thus, for example, the apparatus 2 shown in Figure 5 can be activated automatically by immersion in water, or it can be activated by an increase in hydrostatic pressure, or it can be activated by means of actuators interfaced to some external controlling means (not shown). Instead of employing the screw ring member 20, other adjustable means can be employed for varying the tension in the diaphragm 6 to vary the number of times of expansion and collapsing of the region 18 per second. The material from which the diaphragm 6 is made and also its size, shape and thickness can also be used to vary the frequency and/or amplitude of the generated sound. The frequency and/or amplitude of the sound generated can also be varied by varying the external pressure. This can be achieved by changing the depth at which the apparatus 2 is operated at, or, alternatively, by using the apparatus 2 shown in Figure 4 and employing the pump 52 as described above. The diaphragm may be made of any suitable and appropriate elastic material including rubber materials and plastics materials.

## Claims

1. Apparatus for tracking and communicating with objects under water, which apparatus comprises first acoustic transmission means which is able to transmit first acoustic signals from an object under water, and a monitor and communications system which is on or below the water and which comprises second acoustic transmission means which is able to transmit second acoustic signals to the object under water, location determining means which is able to locate the source of the first acoustic signals, and receiver means for enabling the first arid the second acoustic signals to be received and responded to.

2. Apparatus according to claim 1 in which the first and the second acoustic transmission means each uses frequency, amplitude, phase or pulse modulation to convey data.

3. Appparatus according to claim 1 or claim 2 in which the first and/or the second acoustic transmission means are each gas-operated apparatus for making a noise under water.

4. Apparatus according to claim 3 in which the object under water is a diver, and in which the first acoustic transmission means is the diver's air cylinder or cylinders.

5. Apparatus according to any one of the preceding claims in which the location determining means comprises direction determining means for determining the direction from which the first acoustic signals are coming, and distance determining means for determining the distance from which the first acoustic signals are coming.

6. Apparatus according to any one of the preceding claims in which the monitor and communications system comprises a communications link having a receiving system which acknowledges successful receipt of a transmission from an object under water.

7. Apparatus according to claim 3 or claim 4 in which the gas-operated apparatus for making a noise under water comprises a body, a diaphragm which extends over the body to define a chamber between the body and the diaphragm, a gas inlet nozzle which extends into the chamber and which engages an inner surface of the diaphragm, and gas outlet means for enabling gas in the chamber to leave the chamber, the diaphragm being made of an elastic material, the diaphragm being such that it has an outer surface which is in contact with a liquid, and the apparatus being such that in use gas under pressure passes through the gas inlet nozzle and causes the diaphragm to expand and collapse over a region of the diaphragm that is in contact with the gas inlet nozzle thereby to create noise which is adapted for optimum underwater transmission due to the diaphragm being in contact with the liquid.

8. Apparatus according to claim 7 and including tension-adjuster means for adjusting tension in the diaphragm.

9. Apparatus according to claim 7 or claim 8 and including gas inlet valve control means for controlling the rate of flow of gas through the nozzle, and gas outlet valve control means for controlling the gas pressure in the chamber.

10. Apparatus according to any one of claims 7 to 9 and including gas flow restrictor means for ensuring that the gas carrot pass too quickly through the gas inlet nozzle in the event of a failure of part of the apparatus, whereby a sudden rush of gas through the gas inlet nozzle and the generation of too loud a noise which might be damaging to a diver is prevented.

11. Apparatus according to any one of claims 7 to 10 and including outlet gas diffuser means for converting outlet gas passing through the gas outlet means into fine bubbles.

FIG 1

DIRECTION OF DIVER

FIG 2

FIG 3

FIG 4

FIG 5

EP 0 508 819 A2